# EUROPÄISCHE PATENTSCHRIFT

(11) **EP 1 215 401 B1**
(45) Veröffentlichungstag und Bekanntmachung des Hinweises auf die Patenterteilung: **12.01.2005**
(21) Anmeldenummer: 01126810.9
(22) Anmeldetag: 10.11.2001
(51) Int. Cl.: F16B 5/02, F16B 43/00

(54) **Vorrichtung zum Verbinden von Bauteilen**
Device for connecting structural components
Dispositif d'assemblage d'éléments de structure

(30) Priorität: 14.12.2000 DE 20021194 U
(43) Veröffentlichungstag der Anmeldung: 19.06.2002
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER STEINMEISTER & PARTNER GbR

(56) Entgegenhaltungen:
- EP-A- 0 176 663
- EP-A- 0 543 046
- US-A- 5 288 191

## Beschreibung

Die Erfindung betrifft eine Vorrichtung zum Verbinden von Bauteilen, mit einem zur Anordnung an dem einen Bauteil ausgebildeten Basisteil, das eine Gewindebuchse aus Metall aufweist. die im Preßsitz in einer Fassung aus Kunststoff gehalten ist, einem Abstandshalter, der mit dem Basisteil in Gewindeeingriff steht und dazu ausgebildet ist, sich mit einem Ende an dem anderen Bauteil abzustützen, und einer reibschlüssig durch den Abstandshalter gesteckten Verbindungsschraube.

Eine bekannte Vorrichtung dieser Art wird in US 5 288 191 A und in ähnlicher Form in EP-B-0 176 663 beschrieben und dient dazu, zwei in einem bestimmten Abstand zueinander angeordnete Bauteile mit Hilfe der Verbindungsschraube zu verbinden, ohne daß die Bauteile beim Anziehen der Verbindungsschraube verformt werden. Die Verbindungsschraube wird beispielsweise durch das Bauteil gesteckt, das sich an dem Abstandshalter abstützen soll, und wird dann in ein Innengewinde des anderen, mit dem Basisteil verbundenen Bauteils eingeschraubt. Bei dieser Einschraubbewegung wird der Abstandshalter reibschlüssig mitgenommen. Das Gewinde zwischen Abstandshalter und Basisteil ist ein Linksgewinde, so daß der Abstandshalter weiter aus dem Basisteil herausgeschraubt wird und dem durch den Kopf der Verbindungsschraube gehaltenen Bauteil entgegen kommt, bis sich dieses Bauteil schließlich gegen die Stirnfläche des Abstandshalters legt.

Wenn jedoch der Abstand zwischen den zu verbindenden Bauteilen größer ist als der maximale Verstellweg des Abstandshalters, so kann es vorkommen, daß beim Einschrauben der Verbindungsschraube der Abstandshalter ganz aus dem Basisteil herausgeschraubt wird. Da der Abstandshalter in diesem Fall nicht oder nur schwer zugängig ist, bereitet es Schwierigkeiten, den Gewindeeingriff zwischen Abstandshalter und Basisteil wieder herzustellen.

Im Anlieferungszustand der Verbindungsvorrichtung ist der Abstandshalter normalerweise ganz in das Basisteil eingeschraubt. Aus der Praxis ist eine Verbindungsvorrichtung bekannt, bei der der Abstandshalter in dieser Stellung an einem Anschlag anliegt und außerdem durch eine federnde Zunge in seiner Position gehalten wird. Der Widerstand dieser Zunge muß sich jedoch überwinden lassen, wenn die Verbindungsschraube eingeschraubt wird. Somit ist nicht ausgeschlossen, daß sich der Abstandshalter vor dem Einsatz der Verbindungsvorrichtung aufgrund unsachgemäßer Behandlung oder aufgrund von Erschütterungen ganz vom Basisteil löst, so daß die Teile der Verbindungsvorrichtung auseinander fallen und verloren gehen.

Aus EP 0 543 046 A1 ist eine Schraubeinheit mit einer Gewindebuchse und einem aus dieser herausschraubbaren Abstandshalter bekannt, bei der an einem Ende des Innengewindeabschnitts der Gewindebuchse eine Schulter ausgebildet ist, die einen Anschlag für einen auf den Abstandshalter aufgeclipsten Sicherungsring bildet.

Aufgabe der Erfindung ist es, eine Vorrichtung der eingangs genannten Art zu schaffen, bei der der Abstandshalter und das Basisteil unverlierbar zusammengehalten sind.

Diese Aufgabe wird erfindungsgemäß dadurch gelöst, daß die Bewegung des Abstandshalters relativ zum Basisteil in einer Richtung durch eine am Ende des Gewindeabschnitts des Abstandshalters gebildete Schulter begrenzt wird, die axial an einem erst nach dem Zusammenbau von Abstandshalter und Basisteil wirksam werdenden Anschlag des Basisteils anstößt, wenn der Abstandshalter seinen maximalen Ausfahrweg erreicht hat, und daß der Anschlag an der Fassung ausgebildet ist, so daß er den Zusammenbau gestattet.

Bei der erfindungsgemäßen Vorrichtung ist es somit möglich, den Abstandshalter zunächst in das Basisteil einzuschrauben und dann den Anschlag wirksam werden zu lassen, so daß der Abstandhalter sich nicht wieder vollständig aus dem Basisteil herausschrauben läßt. In der anderen Richtung kann erforderlichenfalls die Relativbewegung von Abstandshalter und Basisteil durch normale Anschläge begrenzt werden, so daß sich der Abstandshalter nicht vollständig durch das Basisteil durchschrauben läßt. Auf diese Weise werden Abstandshalter und Basisteil nach dem Zusammenbau unverlierbar zusammen gehalten.

Weitere Ausgestaltungen der Erfindung ergeben sich aus den Unteransprüchen.

In einer Ausführungsform wird der erst nach dem Zusammenbau wirksam werdende Anschlag durch ein radial nach innen vom Basisteil vorspringendes Federelement, beispielsweise in der Form einer federnden Zunge gebildet, die beim Einschrauben des Abstandshalters ausweicht und sich dann verriegelnd hinter dessen Schulter legt.

In einer anderen Ausführungsform ist der Anschlag starr an der Fassung ausgebildet. Bei dieser Lösung wird der Abstandshalter zunächst in die Gewindebuchse eingeschraubt, und erst dann wird die Gewindebuchse in die Fassung des Basisteils eingepreßt, so daß der Anschlag wirksam wird.

Im folgenden werden Ausführungsbeispiele der Erfindung anhand der Zeichnungen näher erläutert.

Es zeigen:
- Fig. 1: einen axialen Schnitt durch eine Verbindungsvorrichtung und zwei zu verbindende Bauteile;
- Fig. 2: eine Verbindungsvorrichtung gemäß einer anderen Ausführungsform; und
- Fig. 3: einen Teil der Verbindungsvorrichtung nach Fig. 2 in einer Stirnansicht.

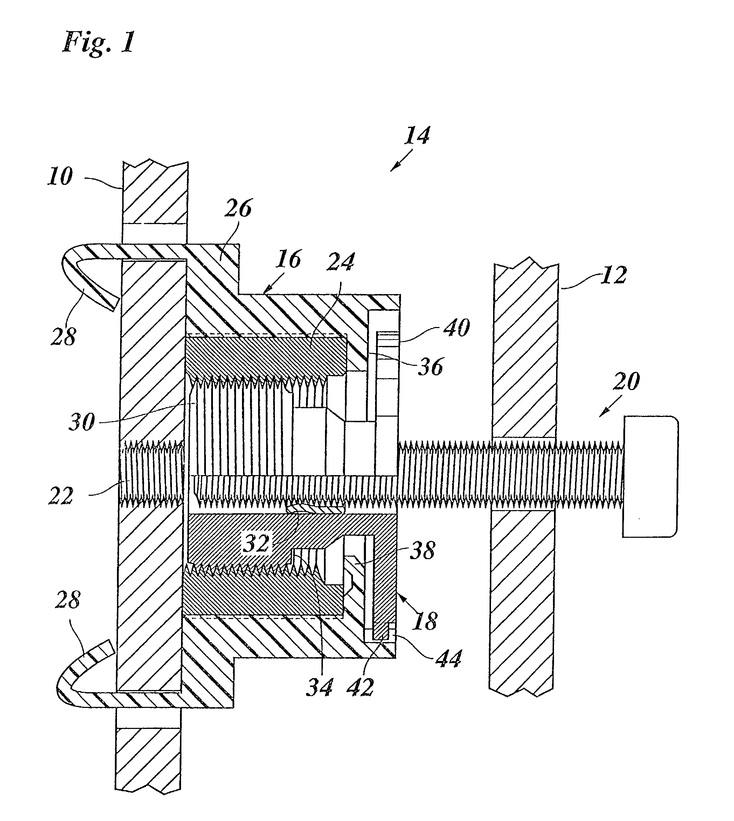

In Fig. 1 sind zwei plattenförmige Bauteile 10, 12 gezeigt, die durch eine Verbindungsvorrichtung 14 auf Abstand miteinander verbunden werden sollen. Die Verbindungsvorrichtung 14 wird gebildet durch ein an dem Bauteil 10 gehaltenes Basisteil 16, einen in das Basisteil 16 eingeschraubten Abstandshalter 18 und eine Verbindungsschraube 20, die durch das Bauteil 12 hindurch und in eine Mittelbohrung des Abstandshalters 18 eingesteckt ist und bei der Fertigstellung der Verbindung in eine Gewindebohrung 22 des Bauteils 10 eingeschraubt wird.

Das Basisteil 16 hat eine Gewindebuchse 24 aus Metall, die sich an dem Bauteil 10 abstützt und am äußeren Umfang eine Rändelung aufweist, auf die eine Fassung 26 aus Kunststoff aufgepreßt ist. Die Fassung 26 bildet zwei Klauen 28, mit denen das Basisteil 16 drehfest an das Bauteil 10 angeklipst ist.

Der Abstandshalter 18 besteht ganz aus Metall. Die Gewindebuchse 24 des Basisteils und der Abstandshalter stehen durch ein Linksgewinde 30 miteinander in Eingriff. In die Mittelbohrung des Abstandshalters 18 ist ein Federring 32 eingepreßt, der eine kraftschlüssige Verbindung zum Außengewinde der Verbindungsschraube 20 herstellt.

Wenn die Verbindungsschraube 20 in die Gewindebohrung 22 des Bauteils 10 eingeschraubt wird, so wird der Abstandshalter 18 in Drehrichtung mitgenommen, während das Basisteil 16 durch die Klauen 28 drehfest gehalten wird. Aufgrund des Linksgewindes wird daher der Abstandshalter 18 aus dem Basisteil 16 herausgeschraubt, so daß er sich axial auf das Bauteil 12 zu bewegt, das seinerseits durch den Kopf der Verbindungsschraube 20 gegen den Abstandshalter gedrückt wird.

Das Linksgewinde 30 des Abstandshalters 18 wird an einem Ende, rechts in Figur 1, durch eine Schulter 34 begrenzt. Die Fassung 26 bildet am inneren Umfangsrand einen umlaufenden Bund 36, an dem sich ein Ende der Gewindebuchse 24 abstützt. Von diesem Bund 36 ragt an mindestens einer Umfangsstelle eine federnde Zunge 38 nach innen. Diese Zunge 38 bildet einen Anschlag, der mit Schulter 34 zusammenwirkt und so den maximalen Ausfahrweg des Abstandhalters 18 begrenzt.

An dem Ende, das dem Bauteil 12 zugewandt ist, weist der Abstandshalter 18 einen radial vorspringenden Flansch 40 auf, der eine Anlagefläche für das Bauteil 12 bildet, wenn die Bauteile 10 und 12 durch die Verbindungsschraube 20 miteinander verspannt sind. In dem in Figur 1 gezeigten Zustand, in dem der Abstandshalter 18 noch ganz in das Basisteil 16 zurückgezogen ist, schließt die Außenfläche des Flansches 40 bündig mit der Stirnfläche des Basisteils 16 ab. Ein radial vom Rand des Flansches 40 ausgehender Vorsprung 42 liegt an einem nach innen ragenden Anschlag 44 des Basisteils 16 an. Der Anschlag 44 verhindert somit, daß der Abstandshalter 18 in Einschraubrichtung der Verbindungsschraube 20 gesehen links herum gedreht wird. Somit läßt sich der Abstandshalter 18 nicht über die in Figur 1 gezeigte Position hinaus in Richtung auf das Bauteil 10 verstellen. Wenn jedoch die Verbindungsschraube 20 rechts herum in die Gewindebuchse 24 eingeschraubt wird, kann sich der Abstandshalter 18 rechts herum mitdrehen, da dann der Vorsprung 42 vom Anschlag 44 freikommt. Nach einer vollständigen Umdrehung des Abstandshalters 18 ist der Vorsprung 42 bereits so weit aus dem Basisteil 16 herausgetreten, daß er sich außerhalb des Basisteils an dem Anschlag 44 vorbei bewegen kann.

Bei dem gezeigten Ausführungsbeispiel ist somit sichergestellt, daß sich der Abstandshalter 18 weder in der einen noch in der anderen Richtung aus dem Basisteil 16 herausschrauben läßt.

Beim Zusammenbau der Verbindungsvorrichtung kann der Abstandshalter 18 jedoch von der rechten Seite in Figur 1 aus in die Gewindebuchse 24 des Basisteils eingeschraubt werden. Dabei wird die elastische Zunge 38 zunächst nach innen gebogen, so daß sie dem Abstandshalter 18 ausweicht. Beim weiteren Einschrauben des Abstandshalters gleitet die Zunge 38 dann am Außengewinde des Abstandshalters entlang, und sie gleitet schließlich über die Schulter 34 hinweg, so daß sie wieder in ihre ursprüngliche Position zurückfedern kann, in der sie als Anschlag für die Schulter 34 wirksam ist.

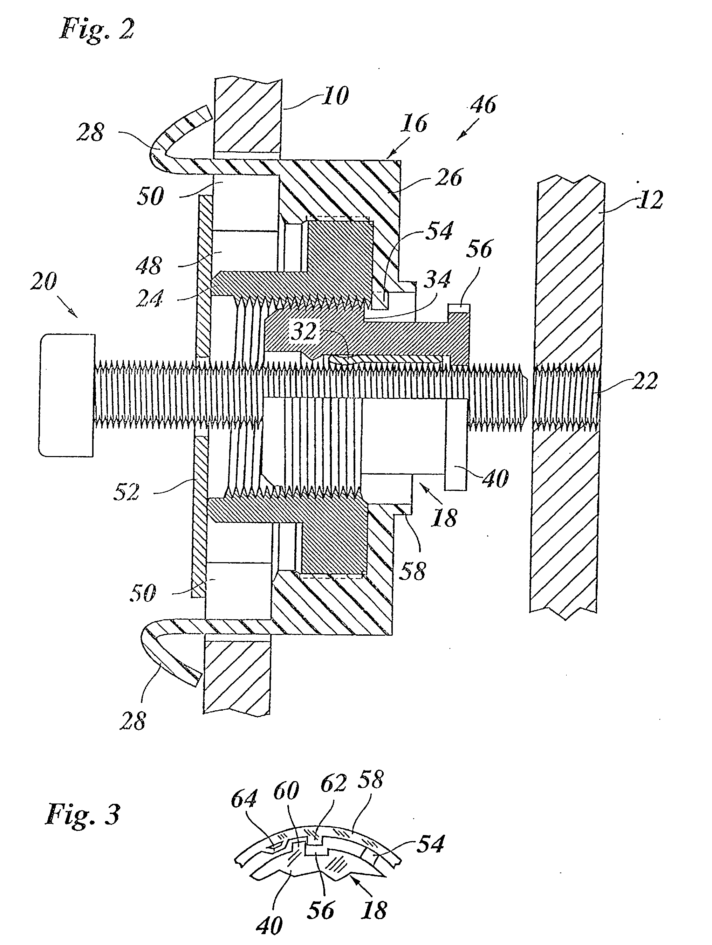

Figuren 2 und 3 zeigen als weiteres Beispiel eine Verbindungsvorrichtung 46, bei der die Verbindungsschraube 20 vom entgegengesetzten Ende her eingeschraubt wird. Das Bauteil 10 weist in diesem Fall eine schlüssellochförmige Öffnung 48 mit zwei einander diametral gegenüberliegenden Ausstülpungen 50 zur Aufnahme der Klauen 28 auf. Der kreisförmige innere Teil der Öffnung 48 ist durch eine Scheibe 52 abgedeckt, an der sich der Kopf der Verbindungsschraube 20 und die Gewindebuchse 24 des Basisteils 16 abstützen.

Die Gewindebuchse 24 und der Abstandshalter 18 haben in diesem Fall ein Rechtsgewinde, so daß der Abstandshalter 18 nach rechts in Figur 2, in Richtung auf das Bauteil 12 ausfährt, wenn die Verbindungsschraube 20 rechts herum gedreht wird.

Figur 2 zeigt den Abstandshalter 18 bereits im ausgefahrenen Zustand, in dem die Schulter 34 beinahe schon die Anschlagposition erreicht hat. Der Anschlag an der Fassung 26 wird in diesem Fall jedoch nicht durch eine federnde Zunge, sondern durch einen starren Vorsprung 54 gebildet. Der am Abstandshalter 18 ausgebildete Flansch 40, der in diesem Fall einen kleineren Durchmesser hat, weist an einer Stelle seines Umfangs eine Ausnehmung 56 auf, durch die der Vorsprung 54 axial hindurch treten kann.

Bei der Montage der Verbindungsvorrichtung 46 werden zunächst die Gewindebuchse 24 und der Abstandshalter mit einander verschraubt, bevor die Gewindebuchse 24 in die Fassung 26 eingepreßt wird. Der Abstandshalter 18 kann daher von rechts in Figur 2 in die Gewindebuchse 24 eingeschraubt werden, bis ungefähr die in Figur 2 gezeigte Einschraubstellung erreicht ist. Anschließend werden der Abstandshalter 18 und die Gewindebuchse 14 gemeinsam von der linken Seite in Figur 2 aus in die Fassung 26 eingesteckt. Dabei wird der Abstandshalter 18 in einer Winkelstellung gehalten, in der der Vorsprung 54 durch die Ausnehmung 56 hindurch treten kann. In der Endphase der Einsteckbewegung wird dann die Gewindebuchse 24 mit ihrem gerändelten äußeren Umfangsrand in die Fassung 26 eingepreßt. Schließlich wird der Abstandshalter 18 tiefer in die Gewindebuchse 24 eingeschraubt, bis seine entgegengesetzten Stirnflächen mit den entsprechenden Stirnflächen des Basisteils 16 bündig sind.

In diesem Zustand, in dem die Verbindungsvorrichtung das kleinstmögliche Axialmaß hat, wird das Basisteil 16 dann am Bauteil 10 eingeklipst, die Verbindungsschraube 20 wird eingesteckt und eingeschraubt, so daß der Abstandshalter 18 wieder ausgefahren wird.

Figur 3 zeigt einen Teil der Stirnfläche des Flansches 40 sowie eines Teil eines an der Fassung 26 ausgebildeten Kragens 58, der diesen Flansch 40 umgibt. In dem in Figur 3 gezeigten Zustand ist die am Rand des Flansches 40 gebildete Ausnehmung 56 gegenüber dem Vorsprung 54 des Basisteils verdreht. An der in der Ansicht gemäß Figur 3 linken Flanke der Ausnehmung 56 ist ein radial vom Rand des Flansches 40 nach außen ragender Vorsprung 60 ausgebildet. An die innere Umfangsfläche des Kragens 58 sind ein nach innen ragender Anschlag 62 und eine brückenartig ausgebildete Rastfeder 64 angeformt. Solange der Flansch 40 axial außerhalb des Basisteils liegt, wie in Figur 2, kann der Abstandshalter 18 rechts herum gedreht und somit tiefer in das Basisteil 16 eingeschraubt werden. Bei der letzten Umdrehung, unmittelbar bevor das minimale axiale Maß erreicht ist, tritt der Flansch 40 in den Kragen 58 ein. Der Vorsprung 60 gleitet zunächst unter Überwindung eines gewissen Rastwiderstands über die Rastfeder 64 hinweg und schlägt dann am Anschlag 62 an. Auf diese Weise wird die weitere Einschraubbewegung des Abstandhalters 18 begrenzt. Durch die Rastfeder 64 wird der Abstandshalter in der erreichten Position mit minimalem Axialmaß gehalten, und es wird verhindert, daß sich der Abstandshalter aufgrund von Erschütterungen von selbst verstellt. Die Kraft der Rastfeder 64 ist jedoch so dimenioniert, daß sie durch den Reibschluß zwischen der Verbindungsschraube 20 und dem Abstandshalter überwunden werden kann, wenn die Verbindungsschraube 20 eingeschraubt wird. Bei dieser Einschraubbewegung dreht sich der Abstandshalter 18 in der Ansicht gemäß Figur 3 links herum, so daß sich der Vorsprung 60 vom Anschlag 62 entfernt.

## Patentansprüche

1. Vorrichtung zum Verbinden von Bauteilen (10, 12), mit einem zur Anordnung an dem einen Bauteil (10) ausgebildeten Basisteil (16), das eine Gewindebuchse (24) aus Metall aufweist, die im Preßsitz in einer Fassung (26) aus Kunststoff gehalten ist, einem Abstandshalter (18), der mit dem Basisteil (16) in Gewindeeingriff steht und dazu ausgebildet ist, sich mit einem Ende an dem anderen Bauteil (12) abzustützen, und einer reibschlüssig durch den Abstandshalter (18) gesteckten Verbindungsschraube (20), **dadurch gekennzeichnet, daß** die Bewegung des Abstandshalters (18) relativ zum Basisteil (16) in einer Richtung durch eine am Ende des Gewindeabschnitts des Abstandshalters gebildete Schulter (34) begrenzt wird, die axial an einem erst nach dem Zusammenbau von Abstandshalter (18) und Basisteil (16) wirksam werdenden Anschlag (38; 54) des Basisteils anstößt, wenn der Abstandshalter seinen maximalen Ausfahrweg erreicht hat, und daß der Anschlag (38; 54) an der Fassung (26) ausgebildet ist, so daß er den Zusammenbau gestattet.

2. Vorrichtung nach Anspruch 1, **dadurch gekennzeichnet, daß** der Anschlag durch ein Federelement (38) gebildet wird, das beim Einschrauben des Abstandshalters (18) nachgibt und sich dann verriegelnd hinter die Schulter (34) legt.

3. Vorrichtung nach Anspruch 1, **dadurch gekennzeichnet, daß** der Anschlag (54) starr an der Fassung (26) ausgebildet ist.

4. Vorrichtung nach einem der vorstehenden Ansprüche, **dadurch gekennzeichnet, daß** der Abstandhalter (18) an dem Ende, dem die Schulter (34) zugewandt ist, einen radial überstehenden Flansch (40) aufweist und daß ein von dem Flansch (40) ausgehender Vorsprung (42; 60) zusammen mit einem am Basisteil (16) ausgebildeten Anschlag (44; 62) die Drehbewegung des Abstandshalters (18) in einer Endlage relativ zum Basisteil (16) begrenzt.

5. Vorrichtung nach den Ansprüchen 3 und 4, **dadurch gekennzeichnet, daß** der Flansch (40) am äußeren Umfangsrand eine Ausnehmung (56) aufweist, die zu dem mit der Schulter (34) zusammenwirkenden Anschlag (54) des Basisteils komplementär ist.

## Claims

1. Device for connecting structural components (10, 12), having a base part (16) which is constructed for arrangement on the one structural component (10) and which has a threaded bush (24) of metal which is held in a press fit in a frame (26) of plastics material, a distance piece (18) which is in threaded engagement with the base part (16) and which is constructed to be supported by one end on the other structural component (12), and a connecting screw (20) which is inserted in a frictionally engaging manner through the distance piece (18), **characterised in that** the movement of the distance piece (18) relative to the base part (16) is limited in one direction by a shoulder (34) which is formed at the end of the threaded portion of the distance piece and which butts axially against a stop (38; 54) of the base part when the distance piece has reached its maximum outward travel, the stop not becoming effective until after the assembly of the distance piece (18) and the base part (16), and **in that** the stop (38; 54) is formed on the frame (26), so that it permits assembly.

2. Device according to claim 1, **characterised in that** the stop is formed by a resilient member (38) which gives when the distance piece (18) is screwed in and then lies in a latching manner behind the shoulder (34).

3. Device according to claim 1, **characterised in that** the stop (54) is formed rigidly on the frame (26).

4. Device according to any one of the preceding claims, **characterised in that** the distance piece (18) has a radially protruding flange (40) on the end that the shoulder (34) faces, and **in that** a projection (42; 60) extending from the flange (40) limits, together with a stop (44; 62) formed on the base part (16), the rotational movement of the distance piece (18) in an end position relative to the base part (16).

5. Device according to claims 3 and 4, **characterised in that** the flange (40) has, on the outer circumferential edge, a recess (56) which is complementary with the stop (54) of the base part, which stop co-operates with the shoulder (34).

## Revendications

1. Dispositif pour relier des éléments de construction (10, 12), comportant un élément de base (16) conçu pour être disposé sur l'un des éléments de construction (10), qui contient une douille filetée (24) en métal laquelle est maintenue par ajustement pressé dans une monture (26) en matière plastique, comportant un écarteur (18) qui est en prise filetée avec l'élément de base (16) et est conçu pour prendre appui, par une extrémité, contre l'autre élément de construction (12), et comportant une vis de liaison (20) emboîtée par friction dans l'écarteur (18), **caractérisé en ce que** le déplacement de l'écarteur (18) par rapport à l'élément de base (16) est limité dans un sens par un épaulement (34) formé à l'extrémité du tronçon fileté de l'écarteur, lequel épaulement vient buter axialement contre une butée (38 ; 54) de l'élément de base, opérant seulement après assemblage de l'écarteur (18) et de l'élément de base (16), lorsque l'écarteur a atteint sa distance d'écartement maximal, et **en ce que** la butée (38 ; 54) est réalisée sur la monture (26) de manière à permettre l'assemblage.

2. Dispositif selon la revendication 1, **caractérisé en ce que** la butée est formée par un élément à ressort (38) qui cède lorsque l'on visse à l'intérieur l'écarteur (18) et se place ensuite en le verrouillant derrière l'épaulement (34).

3. Dispositif selon la revendication 1, **caractérisé en ce que** la butée (54) est réalisée rigidement sur la monture (26) .

4. Dispositif selon l'une des revendications précédentes, **caractérisé en ce que** l'écarteur (18) présente une bride (40) dépassant radialement à l'extrémité vers laquelle est tourné l'épaulement (34), et **en ce qu'**une saillie (42 ; 60), partant de la bride (40), limite, avec une butée (44 ; 62) formée sur l'élément de base (16), le mouvement de rotation de l'écarteur (18) dans une position de fin de course par rapport à l'élément de base (16).

5. Dispositif selon les revendications 3 et 4, **caractérisé en ce que** la bride (40) présente, sur le bord périphérique extérieur, un évidement (56) qui est complémentaire de la butée (54) de l'élément de base, coopérant avec l'épaulement (34).
